# EUROPEAN PATENT APPLICATION

(11) **EP 4 401 198 A1**
(43) Date of publication of application: **17.07.2024**
(21) Application number: 23755733.5
(22) Date of filing: 09.02.2023
(51) Int. Cl.: H01M 10/617, H01M 50/103

(54) **HOLDER FOR BATTERY CELL, AND BATTERY CELL, BATTERY AND ELECTRIC DEVICE**

(30) Priority: 18.02.2022 CN 202220334746 U
(71) Applicant: Contemporary Amperex Technology Co., Limited, Ningde, Fujian 352100 (CN)
(72) Inventor: ZENG, Chao, Ningde, Fujian 352100 (CN); LI, Zhiqiang, Ningde, Fujian 352100 (CN); CHEN, Qingrong, Ningde, Fujian 352100 (CN); WANG, Shengwei, Ningde, Fujian 352100 (CN)
(74) Representative: Behr, Wolfgang
(86) International application number: PCT/CN2023/075186
(87) International publication number: WO 2023/155730

(57) **Abstract**

This application relates to a bottom support for battery cell, a battery cell, a battery, and an electric device. The bottom support is configured for supporting a jelly roll, and the bottom support includes a bottom plate, where the bottom plate includes a central region and a peripheral region surrounding the central region. The bottom plate is constructed to form at least one recessed group, and a recessed area increases gradually among the recessed group(s) in a direction from the peripheral region to the central region of the bottom plate. The bottom support for battery cell, the battery cell, the battery, and the electric device provided in this application reduce the probability of thermal runaway in the battery cell.

## Description

### CROSS-REFERENCE TO RELATED APPLICATIONS

This application refers to Chinese Patent Application No. 2022203347466, filed on February 18, 2022 and entitled "BOTTOM SUPPORT FOR BATTERY CELL, BATTERY CELL, BATTERY, AND ELECTRIC DEVICE", which is incorporated herein by reference in its entirety.

### TECHNICAL FIELD

This application relates to the field of batteries, and in particular, to a bottom support for battery cell, a battery cell, a battery, and an electric device.

### BACKGROUND

With the development of battery technology, batteries and their battery cells have been widely used as a new energy storage structure in electric devices, such as electric bicycles, electric cars, electric airplanes, electric ships, electric toy cars, electric toy ships, electric toy airplanes, and electric tools.

A battery includes a plurality of battery cells that are stacked, and the plurality of battery cells are electrically connected, to output electrical energy of the battery for supplying power to electric devices. Traditional battery cells are prone to thermal runaway, so how the probability of thermal runaway in battery cells is reduced has become an urgent problem to be solved.

### SUMMARY

In view of the foregoing problems, this application provides a bottom support for battery cell, a battery cell, a battery, and an electric device for reducing the probability of thermal runaway in the battery cell.

According to a first aspect, this application provides a bottom support configured for supporting a jelly roll, and the bottom support includes a bottom plate, where the bottom plate includes a central region and a peripheral region surrounding the central region. The bottom plate is constructed to form at least one recessed group, and a recessed area increases gradually among the recessed group(s) in a direction from the peripheral region to the central region of the bottom plate.

In the technical solution of the embodiments of this application, a larger recessed area of the recessed group means a higher electrolyte absorption capacity of an electrolyte absorption region corresponding to a position of the recessed group on a jelly roll bottom surface. Since the recessed area increases gradually among the recessed group(s) in the direction from the peripheral region to the central region of the bottom plate, the electrolyte absorption capacity also increases gradually among the electrolyte absorption regions arranged in sequence from an outer layer to the central layer of the jelly roll bottom surface. With a higher electrolyte absorption capacity, more electrolyte is absorbed. As a result, more heat is taken away by the electrolyte, leading to a smaller temperature difference between an inner layer and an outer layer of the jelly roll in the direction from the outer layer to the central layer of the jelly roll bottom surface. Consequently, heat distribution on the entire jelly roll bottom surface is relatively uniform, and the temperature differences between various regions are small. This can reduce the possibility of thermal runaway in the battery cell.

In some embodiments, each recessed group includes a plurality of recessed parts arranged in sequence along the direction from the peripheral region to the central region, all recessed parts in a same surrounding direction in each recessed group are defined as a row, and a sum of areas of all recessed parts in a same row is defined as a sub-recessed area; and
a sum of sub-recessed areas of all rows is the recessed area of each recessed group, and the sub-recessed area increases gradually among the rows in the direction from the peripheral region to the central region of the bottom plate.

As the sub-recessed area increases gradually, the electrolyte absorption capacity increases gradually in the direction from the peripheral region to the central region, and the corresponding heat dissipation capacity also increases gradually. This results in a relatively uniform temperature distribution and smaller temperature differences in various regions of the jelly roll.

In some embodiments, the central region of the bottom plate is constructed to form a central recessed part, where the central recessed part has a recessed area larger than the largest sub-recessed area in each recessed group.

With the recessed area of the central recessed part larger than the largest sub-recessed area in each recessed group, the central layer of the jelly roll bottom surface has the maximum electrolyte absorption capacity. Consequently, the central layer of the jelly roll bottom surface can also dissipate heat efficiently in time, preventing the central layer of the jelly roll bottom surface from being damaged due to an excessively high temperature. Moreover, the combination of the central recessed part with other recessed groups can further enhance the overall heat dissipation capacity of the jelly roll bottom surface.

In some embodiments, the recessed group includes at least two groups arranged in sequence along a surrounding direction of the peripheral region; and any two recessed groups located on two opposite sides of the central recessed part are symmetrically distributed with respect to a central line of the central recessed part.

Specifically, the jelly roll bottom surface has a plurality of electrolyte absorption regions corresponding one-to-one to all recessed groups. Any two electrolyte absorption regions located on two opposite sides of the central layer are symmetrically distributed with respect to the central axis of the jelly roll. With any two recessed groups located on two opposite sides of the central recessed part symmetrically distributed with respect to the central line of the central recessed part, in the direction from an outer layer to the central layer of the jelly roll, each electrolyte absorption region has the same electrolyte absorption capacity. This ensures more stable heat dissipation of the jelly roll, resulting in smaller temperature differences in various regions.

In some embodiments, two adjacent recessed parts located in a same surrounding direction of the peripheral region in two adjacent recessed groups are correspondingly communicated.

With this design, the bottom plate has a larger recessed area, correspondingly increasing the electrolyte absorption capacity of the jelly roll bottom surface and allowing for better heat dissipation performance of the jelly roll.

In some embodiments, a side plate fitted to the bottom plate is further included, where the side plate is consecutively disposed in a surrounding direction of the peripheral region and together with the bottom plate, encloses a limiting space for limiting the jelly roll.

This allows for optimal contact between the bottom plate and the jelly roll even if the battery cell experiences vibration under the influence of the external environment. This prevents the displacement of the jelly roll relative to the bottom plate, ensuring that the jelly roll consistently maintains optimal electrolyte absorption capacity and, the heat dissipation process remains more stable.

In some embodiments, the side plate is constructed to form a first communicating hole communicating with the limiting space.

On one hand, the electrolyte inside the housing can enter the limiting space through the first communicating hole and come into contact with the jelly roll, facilitating the maintenance of the electrolyte absorption capacity of the jelly roll. On the other hand, the provision of the first communicating hole can reduce the area of contact between the jelly roll and the side plate. Consequently, the friction between the jelly roll and the side plate is reduced, facilitating the mounting or removal of the jelly roll.

In some embodiments, an upright post is further included, where the upright post is fitted to the bottom plate and is constructed for winding the jelly roll.

The upright post is designed in a way that it can not only support the jelly roll to facilitate the winding of the jelly roll, but also enhance the assembly reliability between the jelly roll and the bottom support. This prevents the displacement of the jelly roll relative to the bottom plate, ensuring that the jelly roll consistently maintains optimal electrolyte absorption capacity, and the heat dissipation process remains more stable.

In some embodiments, the upright post has a hollow structure, and an outer wall of the upright post is provided with a second communicating hole communicating with the inside of the upright post.

In some embodiments, to achieve light weight of the bottom support, the upright post can be designed with a hollow structure. Further, with the second communicating hole provided on the outer wall of the upright post and communicating with the inside of the upright post, the heat in the central layer of the jelly roll can dissipate into the inside of the upright post through the second communicating hole during the operation of the battery cell. This further enhances the heat dissipation performance of the jelly roll.

According to a second aspect, this application provides a battery cell including a housing, a jelly roll, and the foregoing bottom support, where the jelly roll and the bottom support are both arranged in the housing, and the bottom plate of the bottom support is clamped between the jelly roll and the inner bottom wall of the housing.

According to a third aspect, this application provides a battery including a box, and the battery cell according to any one of the foregoing embodiments, where the battery cell is accommodated in the box.

According to a fourth aspect, this application provides an electric device including the battery according to any one of the foregoing embodiments, where the battery is configured to supply electrical energy.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. Throughout the accompanying drawings, the same reference signs represent the same components. In the accompanying drawings:
FIG. 1 is a schematic structural diagram of a vehicle according to some embodiments of this application;
FIG. 2 is a schematic structural exploded view of a battery according to some embodiments of this application;
FIG. 3 is an exploded view of a battery cell according to an embodiment of this application;
FIG. 4 is a schematic structural diagram of a bottom support in the battery cell shown FIG. 1.
FIG. 5 is a schematic structural diagram of a bottom support according to another embodiment of this application; and
FIG. 6 is a schematic structural diagram of a bottom support according to still another embodiment of this application.

Reference signs in specific embodiments are as follows:
1000. vehicle;
100. battery; 200. controller; 300. motor;
10. box; 11. first portion; 12. second portion;
20. battery cell; 21. end cover; 22. housing; 23. jelly roll; 24. bottom support; 241. bottom plate; 2411. recessed group; 24111. recessed part; 24111a. first recessed part; 24111b. second recessed part; 24111c. third recessed part; 24111d. fourth recessed part; 241 11e. fifth recessed part; 24111g. sixth recessed part; 241 11h. seventh recessed part; 24111j. eighth recessed part; 24111k. ninth recessed part; 2412. central recessed part; 242. side plate; 2421. first communicating hole; 243. limiting space; 244. upright post; and 2441. second communicating hole.

### DESCRIPTION OF EMBODIMENTS

To make the objectives, features and advantages of this application more comprehensible, the following further describes specific implementations of this application in detail with reference to the accompanying drawings. In the following descriptions, numerous specific details are set forth in order to provide a thorough understanding of this application. However, this application can be implemented in many other ways different from those described herein, and those skilled in the art can make similar improvements without violating the connotation of this application. Therefore, this application is not restricted by the specific embodiments disclosed below.

In the description of this application, it should be understood that the orientations or positional relationships indicated by the terms "center", "vertical", "transverse", "length", "width", "thickness", "upper", "lower", "front", "rear", "left", "right", "perpendicular", "horizontal", "top", "bottom", "inside", "outside", "clockwise", "counterclockwise", "axial", "radial", "circumferential", and the like are based on the orientations or positional relationships shown in the accompanying drawings. These terms are merely for the ease and brevity of description of the embodiments of this application rather than indicating or implying that the means or components mentioned must have specific orientations or must be constructed or manipulated according to specific orientations, and therefore shall not be construed as any limitations on embodiments of this application.

In addition, the terms "first" and "second" are merely intended for a purpose of description, and shall not be understood as an indication or implication of relative importance or implicit indication of the number of technical features indicated. Therefore, a feature defined by "first" or "second" may explicitly or implicitly include at least one such feature. In the description of this application, the meaning of "a plurality of" is at least two, for example two or three, unless otherwise specifically defined.

In this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or electrical connection, any may refer to a direct connection, an indirect connection via an intermediate medium, an internal communication between two elements, or an interaction between two elements, unless otherwise defined explicitly. Persons of ordinary skill in the art can understand specific meanings of these terms in this application as appropriate to specific situations.

In this application, unless otherwise clearly specified and limited, a first feature being "on" or "under" a second feature may mean that the first and second features are in direct contact, or the first and second features are in indirect contact through an intermediary. Moreover, that the first feature is "above", "over", or "on" the second feature may mean that the first feature is directly above or obliquely above the second feature or simply mean that the first feature has a higher level than the second feature. That the first feature is "below", "beneath", and "under" the second feature may mean that the first feature is directly below or obliquely below the second feature or simply mean that the first feature has a lower level than the second feature.

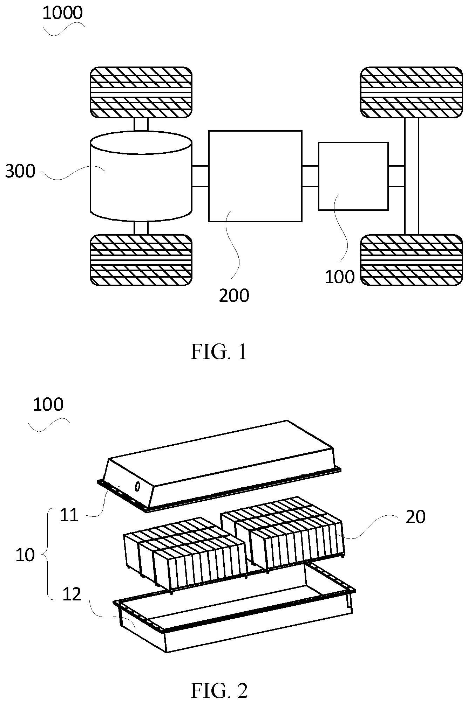

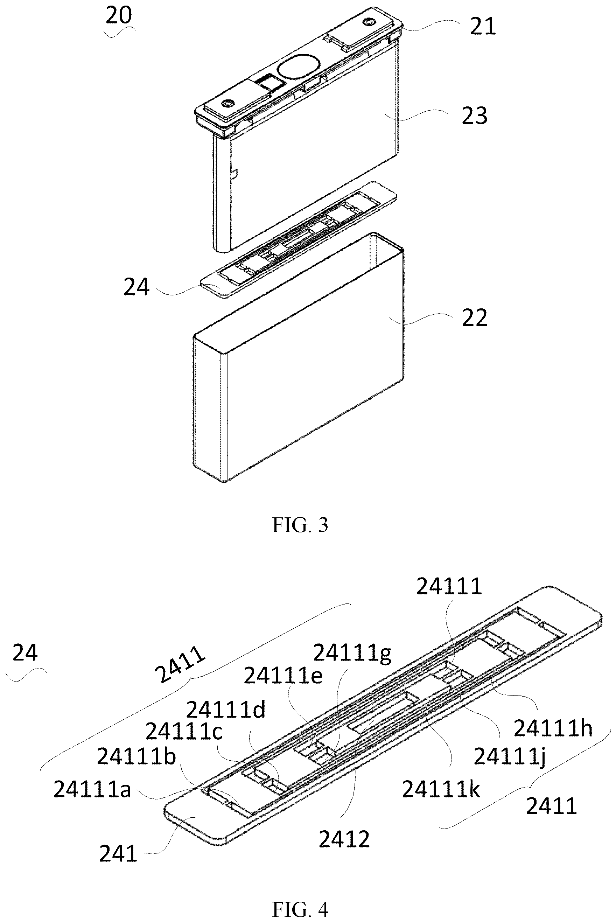

Refer to FIG. 2 and FIG. 3. A battery 100 is formed by a plurality of battery cells 20 connected in series and/or in parallel. The battery cell 20 includes a housing 22, a jelly roll 23, and a bottom support 24, where the jelly roll 23 and the bottom support 24 are both arranged in the jelly roll 23 in housing 22. The bottom support 24 includes a bottom plate 241 clamped between the jelly roll 23 bottom surface and an inner bottom wall of the housing 22. The jelly roll 23 is used for energy storage, and the bottom plate 241 is used for support.

To facilitate the infiltration of the electrolyte inside the housing 22 into the jelly roll 23, typically, a recessed region is also provided on the bottom plate 241. Under the action of the capillary principle, the electrolyte can flow from the peripheral region to the central region of the bottom plate 241 and penetrate through the recessed region of the bottom plate 241 to be absorbed by the jelly roll 23 bottom surface.

Specifically, when the jelly roll 23 is disposed inside the housing 22, an outer layer of the jelly roll 23 bottom surface has a large contact area with the electrolyte, while an inner layer of the jelly roll 23 bottom surface has fewer chances of contact with the electrolyte. Consequently, in a direction from an outer layer to the central layer, the drying degree of the jelly roll 23 bottom surface deepens, and correspondingly, the impedance increases. As a result, the released heat during operation increases gradually. Therefore, in the direction from an outer layer to the central layer of the jelly roll 23 bottom surface, the temperature difference between an inner layer (including the central layer) and an outer layer increases gradually, causing the battery cell 20 to be prone to thermal runaway.

The applicant has noted that although the temperature of the jelly roll 23 bottom surface decreases during the process of absorbing the electrolyte flowing through the bottom plate 241, it does not alleviate the problem that the battery cell 20 is prone to thermal runaway due to temperature differences on the jelly roll 23 bottom surface. This is mainly because the recessed parts 24111 on the bottom plate 241 maintain a consistent recessed area in the direction from the peripheral region to the central region of the bottom plate 241. In this way, the electrolyte absorption capacity of the jelly roll 23 remains consistent in the direction from an outer layer to the central layer of the jelly roll 23 bottom surface. However, as the heat released by electrolyte absorption regions arranged in sequence in the direction from an outer layer to the central layer of the jelly roll 23 bottom surface increases gradually, the solution of simply providing a recessed region on the bottom plate 241 cannot solve the problem of significant temperature differences in the jelly roll 23.

In order to alleviate the problem of significant temperature differences on the jelly roll 23 bottom surface, the applicant has found through research that the bottom plate 241 may be designed as being constructed to form at least one recessed group 2411, and the recessed area increases gradually among the recessed group(s) 2411 in a direction from the peripheral region to the central region of the bottom plate 241. In this way, the electrolyte absorption capacity of the electrolyte absorbed by the jelly roll 23 bottom surface increases gradually in the direction from an outer layer to the central layer. As a result, the heat of the jelly roll 23 bottom surface absorbed by the electrolyte in this direction also increases gradually, allowing the temperature to tend to be the same. Moreover, higher electrolyte absorption capacity leads to lower impedance, resulting in less released heat. Consequently, in a direction from an outer layer to the central layer of the jelly roll 23, the heat released by the jelly roll 23 bottom surface also tends to be the same, reducing the temperature difference between an inner layer and the outer layer of the jelly roll 23 bottom surface. Therefore, the battery cell 20 also has a longer service life.

An embodiment of this application provides an electric device that uses a battery 100 or a battery cell 20 as a power source. The electric device may be but is not limited to an electric toy, an electric tool, an electric bicycle, an electric vehicle, a ship, or a spacecraft. The electric toy may be a fixed or mobile electric toy, for example, an electric toy car, an electric toy ship, and an electric toy airplane. The spacecraft may include an airplane, a rocket, a space shuttle, a spaceship, and the like.

For ease of description, an electric device according to an embodiment of the application being a vehicle 1000 is used as an example for description in the following embodiments.

Referring to FIG. 1, FIG. 1 is a schematic structural diagram of a vehicle 1000 according to some embodiments of this application. The vehicle 1000 may be a fossil fuel vehicle, a natural-gas vehicle, or a new energy vehicle. The new energy vehicle may be a battery electric vehicle, a hybrid electric vehicle, a range-extended electric vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Still referring to FIG. 2, FIG. 2 is an exploded view of a battery 100 according to some embodiments of this application. The battery 100 includes a box 10 and a battery cell 20, where the battery cell 20 is accommodated in the box 10 and is configured to supply electrical energy. The box 10 is configured to provide an accommodating space for the battery cell 20, and the box 10 may be of various structures. In some embodiments, the box 10 may include a first portion 11 and a second portion 12. The first portion 11 and the second portion 12 fit together so that the first portion 11 and the second portion 12 jointly define the accommodating space for accommodating the battery cell 20. The second portion 12 may be a hollow structure with one end open, and the first portion 11 may be a plate structure. The first portion 11 covers the open side of the second portion 12, so that the first portion 11 and the second portion 12 jointly define an accommodating space. Alternatively, both the first portion 11 and the second portion 12 may be a hollow structure with one side open, and the open side of the first portion 11 covers the open side of the second portion 12. Certainly, the box 10 formed by the first portion 11 and the second portion 12 may be in various shapes, for example, cylinder or cuboid.

In the battery 100, a plurality of battery cells 20 may be provided, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery 100 may be formed by a plurality of battery cells 20 connected in series, parallel, or series-parallel first to form a battery module and then a plurality of battery modules being connected in series, parallel, or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, and may be a lithium-sulfur battery, a sodium-ion battery, or a magnesium-ion battery, without being limited thereto. The battery cell 20 may be cylindrical, flat, cuboid, or of other shapes.

Still referring to FIG. 3, FIG. 3 is a schematic structural exploded view of a battery cell 20 according to some embodiments of this application. The battery cell 20 is a smallest unit constituting a battery. As shown in FIG. 3, the battery cell 20 includes an end cover 21, a housing 22, a jelly roll 23, a bottom support 24, and other functional components.

The end cover 21 is a component that covers an opening of the housing 22 to isolate an internal environment of the battery cell 20 from an external environment. A shape of the end cover 21 is not limited and may be adapted to a shape of the housing 22 to fit the housing 22. In some embodiments, the end cover 21 may be made of a material with given hardness and strength (for example, aluminum alloy), so that the end cover 21 is less likely to deform when subjected to extrusion and collision, allowing the battery cell 20 to have higher structural strength and enhanced safety performance. The end cover 21 may be provided with functional components such as an electrode terminal. The electrode terminal may be configured to be electrically connected to the jelly roll 23 for outputting or inputting electrical energy of the battery cell 20. In some embodiments, the end cover 21 may further be provided with a pressure relief mechanism for releasing internal pressure when the internal pressure or temperature of the battery cell 20 reaches a threshold. The end cover 21 may also be made of various materials, such as copper, iron, aluminum, stainless steel, aluminum alloy, and plastic, which are not particularly limited in the embodiments of this application. In some embodiments, an insulator may also be provided on an inner side of the end cover 21. The insulator may be configured to isolate an electrically connected component in the housing 22 from the end cover 21 to reduce the risk of short circuit. For example, the insulator may be made of plastic, rubber, or the like.

The housing 22 is an assembly configured to form the internal environment of the battery cell 20 together with the end cover 21, where the formed internal environment may be configured to accommodate the jelly roll 23, an electrolyte, and other components. The housing 22 and the end cover 21 may be separate components, an opening may be provided on the housing 22, and the end cover 21 covers the opening to form the internal environment of the battery cell 20. Without limitation, the end cover 21 and the housing 22 may alternatively be integrated. Specifically, the end cover 21 and the housing 22 may form a shared connection surface before other components are placed inside the housing, and then the housing 22 is covered with the end cover 21 when inside of the housing 22 needs to be enclosed. The housing 22 may be of various shapes and sizes, such as a rectangular shape, a cylindrical shape, and a hexagonal prism shape. Specifically, the shape of the housing 22 may be determined based on a specific shape and size of a cell assembly. The housing 22 may be made of various materials, such as copper, iron, aluminum, stainless steel, aluminum alloy, and plastic, which are not particularly limited in the embodiments of this application.

The jelly roll 23, also known as a battery cell assembly or an electrode assembly, is a component in which electrochemical reactions take place in the battery cell 20. The housing 22 may include one or more jelly rolls 23. The jelly roll 23 is mainly formed by winding or stacking a positive electrode plate and a negative electrode plate, and a separator is typically disposed between the positive electrode plate and the negative electrode plate. Parts of the positive electrode plate and the negative electrode plate with active substances constitute a body portion of the cell assembly, while parts of the positive electrode plate and the negative electrode plate without active substances separately constitute a tab. A positive tab and a negative tab may both be located at one end of the body portion or be located at two ends of the body portion respectively. During charging and discharging of the battery 100, a positive electrode active substance and a negative electrode active substance react with an electrolyte, and the tabs are connected to electrode terminals to form a current loop.

Referring to FIG. 4, the bottom support 24 is provided in the housing 22 and configured for supporting the jelly roll 23 of the battery cell 20. The bottom support 24 includes a bottom plate 241 clamped between a jelly roll 23 bottom surface and an inner bottom wall of the housing 22, and the bottom plate 241 includes a central region and a peripheral region surrounding the central region. The bottom plate 241 is constructed to form at least one recessed group 2411, and the recessed area increases gradually among the recessed group(s) 2411 in a direction from the peripheral region to the central region of the bottom plate 241.

Specifically, a central layer of the jelly roll 23 bottom surface corresponds to the central region, and inner layers except the central layer of the jelly roll 23 bottom surface correspond to the peripheral region. A direction from an outer layer to the central layer of the jelly roll 23 bottom surface is parallel to or coincident with the direction from the peripheral region to the central region of the bottom plate 241. A larger recessed area of the recessed group 2411 means a higher electrolyte absorption capacity of an electrolyte absorption region corresponding to a position of the recessed group 2411 on the jelly roll 23 bottom surface. Since the recessed area increases gradually among the recessed group(s) 2411 in the direction from the peripheral region to the central region of the bottom plate 241, the electrolyte absorption capacity also increases gradually among the electrolyte absorption regions arranged in sequence in the direction from an outer layer to the central layer of the jelly roll 23 bottom surface. With a higher electrolyte absorption capacity, more electrolyte is absorbed. As a result, more heat is taken away by the electrolyte. As a result, the heat absorbed by the electrolyte from the jelly roll 23 bottom surface increases gradually, allowing a temperature in the direction from an outer layer to the central layer of the jelly roll 23 bottom surface to tend to be the same. Moreover, higher electrolyte absorption capacity leads to lower impedance, resulting in less released heat. Consequently, in a direction from an outer layer to the central layer of the jelly roll 23, the heat released from the jelly roll 23 bottom surface also tends to be the same. As a result, the heat distribution on the entire jelly roll 23 bottom surface is relatively uniform, and the temperature differences between different regions are relatively small. This helps reduce the probability of thermal runaway in the battery cell 20 and allows for a long service life.

In an embodiment, the bottom support 24 may include only the bottom plate 241, but the bottom plate 241 needs to be an insulating plate to prevent the jelly roll 23 from coming into contact with the housing 22 and conducting electricity. In another embodiment, the bottom support 24 may further include an insulating film, and the insulating film is stacked between the bottom plate 241 and the jelly roll 23 bottom surface. The insulating property of the insulating film blocks the electrical conduction between the jelly roll 23 and the housing 22. In this embodiment, the bottom plate 241 can be either an insulating plate or a conductive plate, which can be provided depending on the specific requirements.

In an embodiment, each recessed group 2411 includes a plurality of recessed parts 24111 arranged in sequence along the direction from the peripheral region to the central region, all recessed parts 24111 in a same surrounding direction in each recessed group 2411 are defined as a row, and a sum of areas of all recessed parts 24111 in a same row is defined as a sub-recessed area. A sum of sub-recessed areas of all rows is a recessed area of each recessed group 2411, and the sub-recessed area increases gradually among the rows in the direction from the peripheral region to the central region of the bottom plate 241. In other words, in the direction from the peripheral region to the central region of the bottom plate 241, for two adjacent sub-recessed areas, the next sub-recessed area is larger than the previous sub-recessed area. Each row can be provided with one recessed part 24111 or at least two recessed parts 24111. In addition, each recessed group 2411 can have one or at least two rows, which can be provided depending on specific requirements.

In an example in which each recessed group 2411 is provided with three rows and each row is provided with two recessed parts 24111, it is defined that in a same recessed group 2411, the rows arranged in the direction from the peripheral region to the central region are named in order as the first row, the second row, and the third row. The two recessed parts 24111 provided along the same surrounding direction in the first row are named as the first recessed part 24111a and the second recessed part 24111b; the two recessed parts 24111 provided along the same surrounding direction in the second row are named as the third recessed part 24111c and the fourth recessed part 24111d; and the two recessed parts 24111 provided along the same surrounding direction in the third row are named as the fifth recessed part 24111e and the sixth recessed part 24111g. The sum of the recessed areas of the first recessed part 24111a and the second recessed part 24111b is the first sub-recessed area; the sum of the recessed areas of the third recessed part 24111c and the fourth recessed part 24111d is the second sub-recessed area; and the sum of the recessed areas of the fifth recessed part 24111e and the sixth recessed part 24111g is the third sub-recessed area. In the direction from the peripheral region to the central region of the bottom plate 241, the first sub-recessed area < the second sub-recessed area < the third sub-recessed area.

In another example in which each recessed group 2411 is provided with three rows and each row is provided with one recessed part 24111, it is defined that in a same recessed group 2411, the rows arranged in the direction from the peripheral region to the central region are named in order as the first row, the second row, and the third row. The recessed part 24111 in the first row is named as the seventh recessed part 24111h; the recessed part 24111 in the second row is named as the eighth recessed part 24111j; and the recessed part 24111 in the third row is named as the ninth recessed part 24111k. The recessed area of the seventh recessed part 24111h in the first row is the fourth sub-recessed area; the recessed area of the eighth recessed part 24111j in the second row is the fifth sub-recessed area; and the recessed area of the ninth recessed part 24111k in the third row is the sixth sub-recessed area. In the direction from the peripheral region to the central region of the bottom plate 241, the fourth sub-recessed area < the fifth sub-recessed area < the sixth sub-recessed area.

As the sub-recessed area increases gradually, the electrolyte absorption capacity increases gradually in the direction from the peripheral region to the central region, and the corresponding heat dissipation capacity also increases gradually. This results in a relative uniform temperature distribution and smaller temperature differences in various regions of the jelly roll 23.

In some embodiments, in a same row, any two adjacent recessed parts 24111 may be apart from each other or disposed consecutively. In the direction from the peripheral region to the central region of the bottom plate 241, the recessed parts 24111 of two adjacent rows may be apart from each other or disposed consecutively.

Further, the central region of the bottom plate 241 is constructed to form a central recessed part 2412, where the central recessed part 2412 has a recessed area larger than the largest sub-recessed area in each recessed group 2411. Specifically, the central recessed part 2412 corresponds to the central layer of the jelly roll 23 bottom surface. With the recessed area of the central recessed part 2412 larger than the maximum sub-recessed area in each recessed group 2411, the central layer of the jelly roll 23 bottom surface has the maximum electrolyte absorption capacity. Consequently, the central layer of the jelly roll 23 bottom surface can also dissipate heat efficiently in time, preventing the central layer of the jelly roll 23 bottom surface from being damaged due to an excessively high temperature. Moreover, the combination of the central recessed part 2412 with other recessed groups 2411 can further enhance the overall heat dissipation capacity of the jelly roll 23 bottom surface.

In an embodiment, the recessed group 2411 includes at least two groups arranged in sequence along a surrounding direction of the peripheral region. Any two recessed groups 2411 located on two opposite sides of the central recessed part 2412 are symmetrically distributed with respect to a central line of the central recessed part 2412. Specifically, the jelly roll 23 bottom surface has a plurality of electrolyte absorption regions corresponding one-to-one to all recessed groups 2411. Any two electrolyte absorption regions located on two opposite sides of the central layer are symmetrically distributed with respect to the central axis of the jelly roll 23. With any two recessed groups 2411 located on two opposite sides of the central recessed part 2412 symmetrically distributed with respect to the central line of the central recessed part 2412, in the direction from an outer layer to the central layer of the jelly roll 23, each electrolyte absorption region has the same electrolyte absorption capacity. This ensures more stable heat dissipation of the jelly roll 23, resulting in smaller temperature differences in various regions.

Further, two adjacent recessed parts 24111 located in a same surrounding direction of the peripheral region in two adjacent recessed groups 2411 are correspondingly communicated. Specifically, in an example, four recessed groups 2411 are provided, each group is provided with three rows, and for any two adjacent groups, one group has two recessed parts 24111 per row; and the other group has one recessed part 24111 per row. The first row of one recessed group 2411 is located in the same surrounding direction as the first row of the other recessed group 2411; the second row of one recessed group 2411 is located in the same surrounding direction as the second row of the other recessed group 2411; and the third row of one recessed group 2411 is located in the same surrounding direction as the third row of the other recessed group 2411. Two adjacent recessed parts 24111 located in a same surrounding direction of the peripheral region in two adjacent recessed groups 2411 being correspondingly communicated specifically means that: the second recessed part 24111 in the first row of one recessed group 2411 is adjacent to and communicated with the seventh recessed part 24111h in the other group; and/or the fourth recessed part 24111 in the second row of one recessed group 2411 is adjacent to and communicated with the eighth recessed part 24111j in the other group; and/or the sixth recessed part 24111 in the third row of one recessed group 2411 is adjacent to and communicated with the ninth recessed part 24111k in the other group. With this design, the bottom plate 241 has a larger recessed area, correspondingly increasing the electrolyte absorption capacity of the jelly roll 23 bottom surface and allowing for better heat dissipation performance of the jelly roll 23.

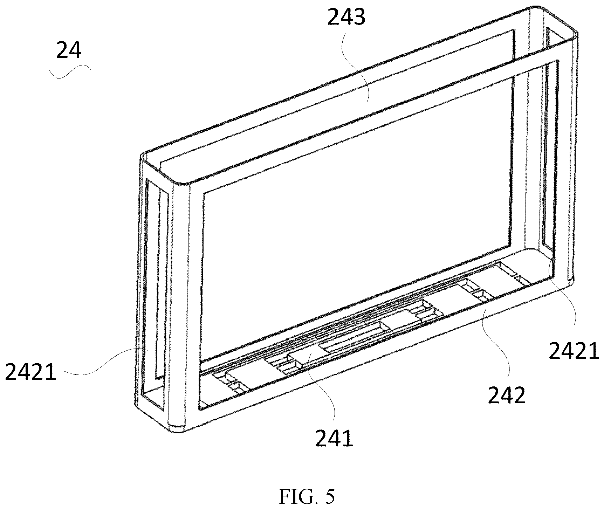

Referring to FIG. 5, in an embodiment, the bottom support 24 further includes a side plate 242 fitted to the bottom plate 241, where the side plate 242 is consecutively disposed in a surrounding direction of the peripheral region and together with the bottom plate 241, encloses a limiting space 243 for limiting the jelly roll 23. In other words, the jelly roll 23 is restricted within the limiting space 243. This allows for optimal contact between the bottom plate 241 and the jelly roll 23 even if the battery cell 20 experiences vibration under the influence of the external environment. This prevents the displacement of the jelly roll 23 relative to the bottom plate 241, ensuring that the jelly roll 23 consistently maintains optimal electrolyte absorption capacity and the heat dissipation process remains more stable.

Further, the side plate 242 is constructed to form a first communicating hole 2412 communicating with the limiting space 243. On one hand, the electrolyte inside the housing 22 can enter the limiting space 243 through the first communicating hole 2421 and come into contact with the jelly roll 23, facilitating the maintenance of the electrolyte absorption capacity of the jelly roll 23. On the other hand, the provision of the first communicating hole 2421 can reduce the area of contact between the jelly roll 23 and the side plate 242. Consequently, the friction between the jelly roll 23 and the side plate 242 is reduced, facilitating the mounting or removal of the jelly roll 23.

In some embodiments, there are a plurality of first communicating holes 2421, and all the first communicating holes 2421 are spaced apart along the circumferential direction of the side plate 242, so as to facilitate the mounting and removal of the jelly roll 23 and ensure sufficient contact between the jelly roll 23 and the electrolyte.

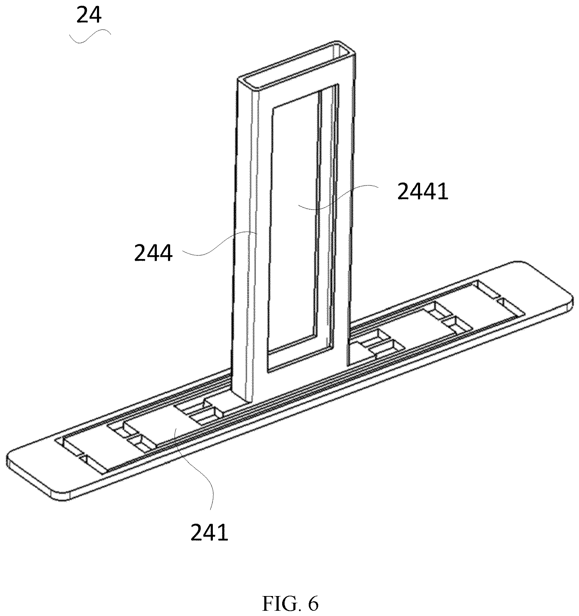

Referring to FIG. 6, in some embodiments, the bottom support 24 further includes an upright post 244, where the upright post 244 is fitted to the bottom plate 241 and is constructed for winding the jelly roll 23. In other words, the jelly roll 23 is formed by winding around the upright post 244. The upright post 244 is designed in a way that it can not only support the jelly roll 23 to facilitate the winding of the jelly roll 23, but also enhance the assembly reliability between the jelly roll 23 and the bottom support 24. This prevents the displacement of the jelly roll 23 relative to the bottom plate 241, ensuring that the jelly roll 23 consistently maintains optimal electrolyte absorption capacity, and the heat dissipation process remains more stable.

In some embodiments, to achieve light weight of the bottom support 24, the upright post 244 can be designed with a hollow structure. Further, with the second communicating hole 2441 provided on the outer wall of the upright post 244 and communicating with the inside of the upright post 244, the heat in the central layer of the jelly roll 23 can dissipate into the inside of the upright post 244 through the second communicating hole 2441 during the operation of the battery cell 20. This further enhances the heat dissipation performance of the jelly roll 23.

In some embodiments, there are a plurality of second communicating holes 2441, and all the second communicating holes 2441 are spaced apart along the circumferential direction of the upright post 244, so that the heat dissipation performance of the jelly roll 23 can be further improved.

As for the bottom support 24 used for the battery cell 20, the battery cell 20, the battery 100, and the electric device, a larger recessed area of the recessed group 2411 means a higher electrolyte absorption capacity of an electrolyte absorption region corresponding to a position of the recessed group 2411 on the jelly roll 23 bottom surface. Since the recessed area increases gradually among the recessed group(s) in the direction from the peripheral region to the central region of the bottom plate 241, the electrolyte absorption capacity increases gradually among the electrolyte absorption regions arranged in sequence in the direction from an outer layer to the central layer of the jelly roll 23 bottom surface. With a higher electrolyte absorption capacity, more electrolyte is absorbed. As a result, more heat is taken away by the electrolyte, leading to a smaller temperature difference between an inner layer and an outer layer of the jelly roll 23 in the direction from an outer layer to the central layer at the jelly roll 23 bottom surface. Consequently, heat distribution on the entire jelly roll 23 bottom surface is relatively uniform, and the temperature differences between various regions are small. This can reduce the possibility of thermal runaway in the battery cell 20.

Technical features in the foregoing embodiments may be combined in any way. For brevity of description, possible combinations of the technical features in the foregoing embodiments are not described all. However, as long as there is no contradiction among combinations of these technical features, all the combinations should be considered within a range recorded in this specification.

The foregoing embodiments only represent several implementations of this application, and descriptions thereof are specific and detailed, but should not be construed as a limitation on the scope of this application patent. It should be noted that those of ordinary skill in the art may further make several modifications and improvements without departing from the concept of this application, and these modifications and improvements also fall within the protection scope of this application.

## Claims

1. A bottom support (24) for supporting a jelly roll (23) of a battery cell (20), the bottom support (24) comprising a bottom plate (241), wherein the bottom plate (241) comprises a central region and a peripheral region surrounding the central region;
wherein the bottom plate (241) is constructed to form at least one recessed group (2411), and a recessed area increases gradually among the recessed group(s) (2411) in a direction from the peripheral region to the central region of the bottom plate (241).

2. The bottom support (24) according to claim 1, wherein each recessed group (2411) comprises a plurality of recessed parts (2412) arranged in sequence along the direction from the peripheral region to the central region, all recessed parts (2412) in a same surrounding direction in each recessed group (2411) are defined as a row, and a sum of areas of all recessed parts (2412) in a same row is defined as a sub-recessed area; and
a sum of sub-recessed areas of all rows is the recessed area of each recessed group (2411), and the sub-recessed area increases gradually among the rows in the direction from the peripheral region to the central region of the bottom plate (241).

3. The bottom support (24) according to claim 2, wherein the central region of the bottom plate (241) is constructed to form a central recessed part (2412), wherein the central recessed part (2412) has a recessed area larger than the largest sub-recessed area in each recessed group.

4. The bottom support (24) according to claim 3, wherein the recessed group (2411) comprises at least two groups arranged in sequence along a surrounding direction of the peripheral region; and
any two recessed groups (2411) located on two opposite sides of the central recessed part (2412) are symmetrically distributed with respect to a central line of the central recessed part (2412).

5. The bottom support (24) according to claim 4, wherein two adjacent recessed parts (2412) located in a same surrounding direction of the peripheral region in two adjacent recessed groups (2411) are correspondingly communicated.

6. The bottom support (24) according to any one of claims 1 to 5, further comprising a side plate (242) fitted to the bottom plate (241), wherein the side plate (242) is consecutively disposed in a surrounding direction of the peripheral region and together with the bottom plate (241), encloses a limiting space (243) for limiting the jelly roll (23).

7. The bottom support (24) according to claim 6, wherein the side plate (242) is constructed to form a first communicating hole (2421) communicating with the limiting space (243).

8. The bottom support (24) according to any one of claims 1 to 7, further comprising an upright post (244), wherein the upright post (244) is fitted to the bottom plate (241) and is constructed for winding the jelly roll (23).

9. The bottom support (24) according to claim 8, wherein the upright post (244) has a hollow structure, and an outer wall of the upright post (244) is provided with a second communicating hole (2441) communicating with the inside of the upright post (244).

10. A battery cell (20), comprising:
a housing (22);
a jelly roll (23); and
the bottom support (24) according to any one of claims 1 to 9, wherein the jelly roll (23) and the bottom support (24) are both arranged in the housing (22), and the bottom plate (241) of the bottom support (24) is clamped between the jelly roll (23) and an inner bottom wall of the housing (22).

11. A battery (100), comprising:
a box (10); and
the battery cell (20) according to any one of claims 1 to 10, wherein the battery cell (20) is accommodated in the box (10).

12. An electric device, comprising the battery (100) according to claim 11, wherein the battery (100) is configured to supply electrical energy.
